(19) Europäisches Patentamt
European Patent Office
Office européen des brevets

(11)  EP 3 088 545 B1

(12)  **EUROPEAN PATENT SPECIFICATION**

(45) Date of publication and mention
of the grant of the patent:
**17.04.2019  Bulletin 2019/16**

(21) Application number: **13900181.2**

(22) Date of filing: **24.12.2013**

(51) Int Cl.:
*C22C 38/00* (2006.01)    *C21D 8/02* (2006.01)
*C21D 9/46* (2006.01)    *B21B 3/00* (2006.01)
*C22C 38/02* (2006.01)    *C22C 38/04* (2006.01)
*C21D 8/04* (2006.01)    *C21D 1/18* (2006.01)

(86) International application number:
**PCT/KR2013/012132**

(87) International publication number:
**WO 2015/099214 (02.07.2015 Gazette 2015/26)**

(54) **QUENCHED STEEL SHEET HAVING EXCELLENT STRENGTH AND DUCTILITY AND METHOD FOR MANUFACTURING SAME**

VERGÜTETES STAHLBLECH MIT HERVORRAGENDER FESTIGKEIT UND DUKTILITÄT UND VERFAHREN ZUR HERSTELLUNG DAVON

TÔLE D'ACIER TREMPÉ PRÉSENTANT UNE EXCELLENTE RÉSISTANCE ET DUCTILITÉ ET PROCÉDÉ POUR SA FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **23.12.2013   KR 20130161430**

(43) Date of publication of application:
**02.11.2016   Bulletin 2016/44**

(73) Proprietor: **Posco**
**Gyeongsangbuk-do 790-300 (KR)**

(72) Inventors:
• **PARK, Kyong-Su**
**Pohang-si**
**Kyungsangbook-do 790-360 (KR)**

• **JANG, Jae-Hoon**
**Pohang-si**
**Kyungsangbook-do 790-360 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(56) References cited:
EP-A1- 2 581 465        WO-A1-2013/105631
JP-A- 2008 255 469      JP-A- 2010 174 280
JP-A- 2011 202 207      JP-A- 2013 076 155
KR-A- 20070 099 693

**Description**

[Technical Field]

The present disclosure relates to a quenched steel sheet having excellent strength and ductility and a method of manufacturing the same.

[Background Art]

In terms of steel, strength and ductility are inversely related, and the following technologies according to the related art are used as methods of obtaining steel having excellent strength and ductility.
As representative examples, there are technologies of controlling a phase fraction of a ferrite, bainite, or martensite structure such as dual phase (DP) steel disclosed in Korean Patent Publication No.0782785, transformation induced plasticity (TRIP) steel disclosed in Korean Patent Publication No.0270396, as well as controlling a residual austenite fraction by utilizing an alloying element such as manganese (Mn), nickel (Ni), or the like disclosed in Korean Patent Publication No.1054773.
However, in a case of DP steel or TRIP steel, increases in strength are limited to 1200 MPa. In addition, in the case of a technology of controlling a residual austenite fraction, increases in strength are limited to 1200 MPa, and there may be a problem of increased manufacturing costs due to the addition of a relatively expensive alloying element.
Thus, the development of a steel in which relatively expensive alloying elements may be used in significantly reduced amounts and excellent strength and ductility may be provided is required. Further examples for hot-stamped quenched steel sheets are disclosed in EP 2 581 465 A1 and WO 2013/105631 A1.

[Disclosure]

[Technical Problem]

An aspect of the present disclosure may provide a quenched steel sheet having excellent strength and ductility without adding a relatively expensive alloying element by properly controlling an alloy composition and heat treatment conditions, and a method of manufacturing the same.

[Technical Solution]

According to an aspect of the present disclosure, a quenched steel sheet consists of, by wt%, carbon (C) : 0.05% to 0.25%, silicon (Si): 0.5% or less (with the exception of 0), manganese (Mn): 0.1% to 2.0%, phosphorus (P): 0.05% or less, sulfur (S) : 0.03% or less, and the balance of iron (Fe) and other unavoidable impurities. The quenched steel sheet includes 90 volume% or more of martensite having a first hardness and martensite having a second hardness as a microstructure of the steel sheet. The first hardness has a greater hardness value than a hardness value of the second hardness, and a ratio of a difference between the first hardness and the second hardness and the first hardness satisfies relational expression 1.

```
[Relational Expression 1]
5 ≤ (first hardness-second hardness)/(first hardness)*100 ≤ 30.
```

An average packet size of the martensite having the first hardness and the martensite having the second hardness is 20 $\mu$m or less.
According to another aspect of the present disclosure, a method of manufacturing a quenched steel sheet according to an exemplary embodiment in the present disclosure include : cold rolling a steel sheet consisting of, by wt%, carbon (C): 0.05% to 0.25%, silicon (Si): 0.5% or less (with the exception of 0), manganese (Mn): 0.1% to 2.0%, phosphorus (P): 0.05% or less, sulfur (S) : 0.03% or less, and the balance of iron (Fe) and other unavoidable impurities, and including ferrite and pearlite as a microstructure at a reduction ratio of 30% or more; heating the cold-rolled steel sheet to a heating temperature (T*) of Ar3°C to Ar3 +500°C; and cooling the heated steel sheet. A heating rate ($v_r$, °C/sec) satisfies relational expression 2 when heating the steel sheet, and a cooling rate ($v_c$, °C/sec) satisfies relational expression 3 when cooling the steel sheet.

[Relational Expression 2]

$$v_r \geq (T^*/110)^2$$

[Relational Expression 3]

$$v_c \geq (T^*/80)^2.$$

The microstructure of the heated steel sheet is an austenite single phase structure having an average diameter of 20 $\mu$m or less, and the martensite with the first hardness transforms during heat treatment from regions which are pearlite and adjacent to the pearlite before the heat treatment, and wherein the martensite with the second hardness transforms during heat treatment from regions which are ferrite and adjacent to the ferrite before the heat treatment

[Advantageous Effects]

According to an exemplary embodiment in the present disclosure, a quenched steel sheet having excellent strength and ductility, of which a tensile strength is 1200 MPa or more and elongation is 7% or more without adding a relatively expensive alloying element, may be provided.

[Description of Drawings]

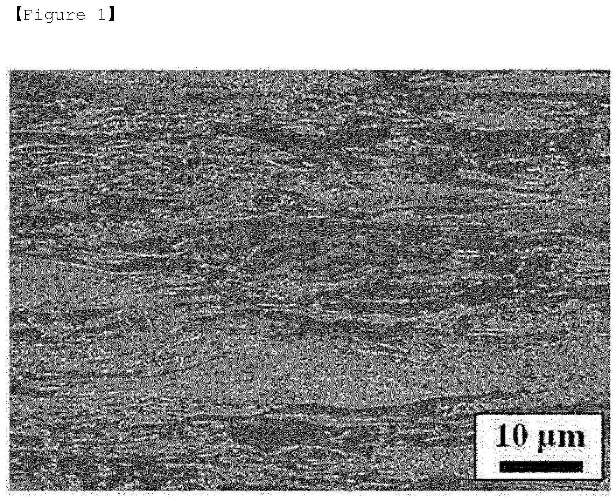

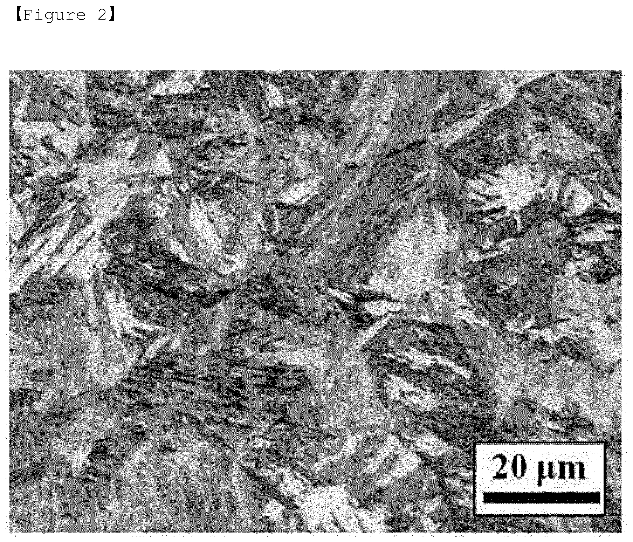

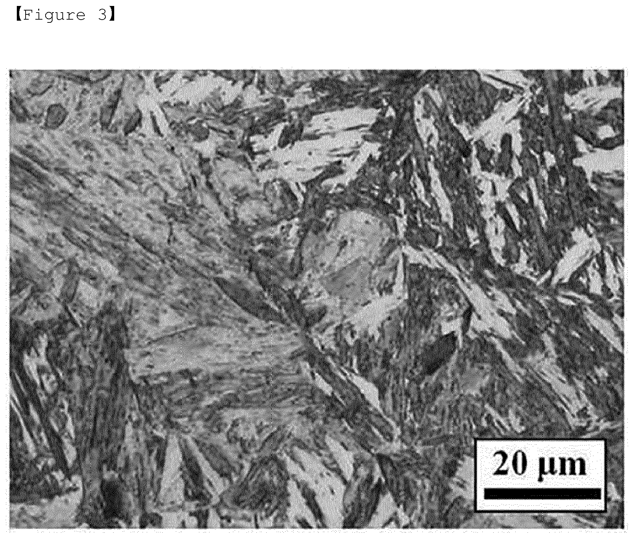

FIG. 1 illustrates a microstructure of a steel sheet before heat treatment, observed with an electron microscope, according to an exemplary embodiment in the present disclosure.FIG. 2 illustrates a microstructure, observed with an optical microscope, of a steel sheet after heat treatment of inventive example 4 meeting conditions of an exemplary embodiment in the present disclosure.FIG. 3 illustrates a microstructure, observed with an optical microscope, of a steel sheet after heat treatment of comparative example 5 under conditions other than those of an exemplary embodiment in the present disclosure.

[Best Mode for Invention]

The inventors have conducted research to solve problems of the above described related art. As a result, a carbon content may be properly provided and cold rolling and a heat treatment process may be properly controlled in the present disclosure, thereby forming two kinds of martensite having different levels of hardness as a microstructure of a steel sheet. Thus, a steel sheet capable of having improved strength and ductility without adding a relatively expensive alloying element may be provided.

Hereafter, a quenched steel sheet having excellent strength and ductility according to an exemplary embodiment in the present disclosure will be described in detail. In the present disclosure, 'heat treatment' means heating and cooling operations carried out after cold rolling.

First, an alloy composition of a quenched steel sheet according to an exemplary embodiment in the present disclosure is described in detail.

Carbon (C): 0.05 wt% to 0.25 wt%

Carbon is an essential element for improving the strength of a steel sheet, and carbon may be required to be added in a proper amount to secure martensite which is required to be implemented in the present disclosure. In a case in which the content of C is less than 0.05 wt%, it may be difficult not only to obtain sufficient strength of a steel sheet, but also to secure a martensite structure of 90 volume% or more as a microstructure of a steel sheet after heat treatment. On the other hand, in a case in which the content of C exceeds 0.25 wt%, ductility of the steel sheet may be decreased. In the present disclosure, the content of C may be properly controlled within a range of 0.05 wt% to 0.25 wt%.

Silicon (Si): 0.5 wt% (with the exception of 0)

Si may serve as a deoxidizer, and may serve to improve strength of a steel sheet. In a case in which the content of Si exceeds 0.5 wt%, scale may be formed on a surface of the steel sheet in a case in which the steel sheet is hot-rolled, thereby degrading surface quality of the steel sheet. In the present disclosure, the content of Si may be properly controlled to be 0.5 wt% or less (with the exception of 0).

Manganese (Mn): 0.1 wt% to 2.0 wt%

Mn may improve strength and hardenability of steel, and Mn may be combined with S, inevitably contained therein during a steel manufacturing process to then form MnS, thereby serving to suppress the occurrence of crack caused by S. In order to obtain the effect in the present disclosure, the content of Mn may be 0.1 wt% or more. On the other hand, in a case in which the content of Mn exceeds 2.0 wt%, toughness of steel may be decreased. In the present disclosure, thus, the content of Mn may be controlled to be within a range of 0.1 wt% to 2.0 wt%.

Phosphorus (P): 0.05 wt% or less

P is an impurity inevitably contained in steel, and P is an element that is a main cause of decreasing ductility of steel as P is organized in a grain boundary. Thus, a content of P may be properly controlled to be as relatively low. Theoretically, the content of P may be advantageously limited to be 0%, but P is inevitably provided during a manufacturing process. Thus, it may be important to manage an upper limit thereof. In the present disclosure, an upper limit of the content of P may be managed to be 0.05 wt%.

Sulfur (S): 0.03 wt% or less

S is an impurity inevitably contained in steel, and S is an element to be a main cause of increasing an amount of a precipitate due to MnS formed as S reacts to Mn, and of embrittling steel. Thus, a content of S may be controlled to be relatively low. Theoretically, the content of S may be advantageously limited to be 0%, but S is inevitably provided during a manufacturing process. Thus, it may be important to manage an upper limit. In the present disclosure, an upper limit of the content of S may be managed to be 0.03 wt%.

The quenched steel sheet may also include iron (Fe) as a remainder thereof, and unavoidable impurities.

Hereinafter, a microstructure of a quenched steel sheet according to an exemplary embodiment in the present disclosure will be described in detail.

A quenched steel sheet according to the invention satisfies a component system, and includes 90 volume% or more of martensite having a first hardness and martensite having a second hardness as a microstructure of a steel sheet. In a case in which two kinds of martensite are less than 90 volume%, it may be difficult to sufficiently secure required strength. Meanwhile, according to an exemplary embodiment in the present disclosure, the remainder of microstructures, other than the martensite structure, may include ferrite, pearlite, cementite, and bainite.

According to the invention, the quenched steel sheet is a steel sheet manufactured by cold rolling and heat treating a steel sheet including ferrite and pearlite as a microstructure. The martensite having the first hardness may be obtained by being transformed from pearlite before heat treatment and in a region adjacent thereto, and the martensite having the second hardness may be obtained by being transformed from ferrite before heat treatment and in a region adjacent thereto. As described later in the present disclosure, in a case in which heat treatment conditions of a cold-rolled steel plate are properly controlled, the diffusion of carbon may be significantly reduced, thereby forming two kinds of martensite as described above.

In a case in which such a structure is secured as the microstructure of the steel sheet, first transformation may occur in martensite having relatively low hardness in an initial process. As subsequent transformation proceeds, work hardening may occur, thereby improving ductility of the steel sheet. In order to obtain the above effect according to an exemplary embodiment in the present disclosure, a ratio of a difference between the first hardness and the second hardness and the first hardness may be properly controlled to satisfy relational expression 1. In a case in which the ratio thereof is less than 5%, an effect of improving ductility of the steel sheet may be insufficient, while in a case in which the ratio thereof exceeds 30%, transformation may be concentrated on an interface of structures of two kinds of martensite, whereby a crack may occur. Thus, ductility of the steel sheet may be decreased.

$$[\text{Relational Expression 1}]$$

$$5 \leq (\text{first hardness} - \text{second hardness})/(\text{first hardness}) * 100 \leq 30$$

Meanwhile, according to the invention, an average packet size of the two kinds of martensite is 20 $\mu$m or less. In a case in which the packet size exceeds 20 $\mu$m, since a block size and a plate size inside a martensite structure are increased simultaneously, strength and ductility of the steel sheet may be decreased. Thus, the packet size of the two kinds of martensite is properly controlled to be 20 $\mu$m or less. Hereafter, according to another exemplary embodiment in the present disclosure, a method of manufacturing a quenched steel sheet having excellent strength and ductility will be described in detail.

The steel sheet satisfying the afore-described composition and including ferrite and pearlite as a microstructure may be cold-rolled. As described above, ferrite and pearlite are sufficiently secured as a microstructure of a steel sheet before heat treatment. In a case in which heat treatment conditions are properly controlled, two kinds of martensite having different levels of hardness after heat treatment may be formed.

In a case in which the steel sheet is cold rolled, a reduction ratio thereof is 30% or more. As described above, in a case in which the steel sheet is cold-rolled at a reduction ratio of 30% or more, as a ferrite structure is elongated in a rolling direction, a relatively large amount of residual transformation may be included inside thereof. In addition, as a pearlite structure is also elongated in a rolling direction, a fine carbide may be formed therein. The cold-rolled ferrite and pearlite structures may allow an austenite grain to be refined in a case in which subsequent heat treatments are undertaken, and may facilitate employment of a carbide. Thus, strength and ductility of the steel sheet may be improved. Meanwhile, FIG. 1 is a view illustrating a microstructure, observed with an electron microscope, of a steel sheet before heat treatment according to an exemplary embodiment in the present disclosure. It can be confirmed in FIG. 1 that ferrite and pearlite structures are elongated in a rolling direction, and a fine carbide is formed inside the pearlite structure.

Next, the cold-rolled steel sheet is heated to a heating temperature (T*) of Ar3°C to Ar3 +500°C. For example, in a case in which the heating temperature (T*) is less than Ar3°C, austenite may not be sufficiently formed. Thus, a martensite structure of 90 volume% or more may not be obtained after cooling the steel sheet. On the other hand, in a case in which the heating temperature (T*) exceeds Ar3°C +500°C, an austenite grain may be coarsened, and diffusion of carbon may be accelerated. Thus, two kinds of martensite having different levels of hardness may not be obtained after cooling the steel sheet. Thus, the heating temperature is Ar3°C to Ar3 +500°C, and in detail, be Ar3°C to Ar3 +300°C.

In a case in which heating the steel sheet, a heating rate ($v_r$, °C/sec) satisfies the following relational expression 2. If the $v_r$ does not satisfy relational expression 2, an austenite grain is coarsened during heating of the steel sheet, and carbon is excessively diffused. Thus, two kinds of martensite having different hardness may not be obtained after cooling the steel sheet. Meanwhile, as a heating rate is increased, an austenite grain is prevented from being coarsened and carbon is prevented from being diffused. Thus, an upper limit thereof is not particularly limited.

$$\text{[Relational Expression 2]}$$

$$v_r \geq (T^*/110)^2$$

Meanwhile, according to the invention, the cold-rolled and heated steel sheet has an austenite single phase structure having an average diameter of 20 μm or less as a microstructure thereof. In a case in which an average diameter of the austenite single phase structure exceeds 20 pm, there may be a risk of coarsening a packet size of a martensite structure formed after cooling the steel sheet, and there may be a risk of decreasing strength and ductility of the steel sheet by increasing a martensite transformation temperature.

Next, the heated steel sheet is cooled. In this case, a cooling rate ($v_c$, °C/sec) may satisfy the following relational expression 3. If the $v_c$ does not satisfy relational expression 3, an austenite grain is coarsened during cooling of the steel sheet, and carbon is excessively diffused. Thus, two kinds of martensite having different hardness may not be obtained after cooling the steel sheet. In addition, a structure of the steel sheet may be transformed into a ferrite, pearlite, or bainite structure during cooling of the steel sheet. Thus, it may be difficult to secure a targeted martensite volume fraction. Meanwhile, as the cooling rate is increased, an austenite grain may be prevented from being coarsened and carbon may be prevented from being diffused. Thus, an upper limit thereof is not particularly limited.

$$\text{[Relational Expression 3]}$$

$$v_c \geq (T^*/80)^2$$

Meanwhile, according to an exemplary embodiment in the present disclosure, in a case in which cooling the heated steel sheet, a high-temperature retention time ($t_m$, sec) may satisfy the following relational expression 4. The high-temperature retention time means the time required for initiating cooling of a steel sheet having reached a heating temperature. In a case in which the high-temperature retention time satisfies relational expression 4, carbon may be prevented from being excessively diffused, and in addition, since an average diameter of an austenite grain before cooling is controlled to be 20 μm or less, martensite having an average packet size of 20 μm or less after cooling may be secured. Meanwhile, as the high-temperature retention time is further decreased, an austenite grain may be prevented from being coarsened and carbon from being diffused. Thus, a lower limit thereof is not particularly limited.

[Relational Expression 4]

$$t_m \leq (8 - 0.006 * T^*)^2$$

Hereinafter, the exemplary embodiments in the present disclosure will be described in more detail. The present disclosure may, however, be exemplified in many different forms and should not be construed as being limited to the specific embodiments set forth herein. While exemplary embodiments are shown and described, it will be apparent to those skilled in the art that modifications and variations could be made without departing from the scope of the present invention as defined by the appended claims below.

**[Embodiment]**

After steel sheets having compositions illustrated in Table 1 is prepared, the steel sheets were cold-rolled, heated, and cooled in a condition of Table 2. Then, a microstructure of the steel sheet was observed, mechanical properties were measured, and the results therefrom are shown in Table 3. In this case, a tensile test was performed at a rate of 5 mm/min with respect to an ASTM subsized specimen, and a Vickers hardness test of each microstructure was performed at a condition in which the microstructure was maintained at a load of 5 g for 10 seconds.

[Table 1]

| Steels | C | Mn | Si | P | S |
|---|---|---|---|---|---|
| Comparative Steel 1 | 0.04 | 0.17 | 0.005 | 0.01 | 0.005 |
| Inventive Steel 1 | 0.10 | 1.49 | 0.003 | 0.02 | 0.003 |
| Inventive Steel 2 | 0.21 | 0.89 | 0.005 | 0.015 | 0.012 |

[Table 2]

| Steels | Reduction Ratio (%) | $T^*$ (°C) | $v_r$ (°C /sec) | $V_r^*$ (°C /sec) | $V_c$ (°C /sec) | $v_c^*$ (°C /sec) | $t_m$ (sec) | $t_m^*$ (sec) | Note |
|---|---|---|---|---|---|---|---|---|---|
| Comparative Steel 1 | 70 | 1000 | 300 | 83 | 1000 | 156 | 1 | 4 | Comparative Example 1 |
| Comparative Steel 1 | 70 | 900 | 300 | 67 | 1000 | 126 | 1 | 6.8 | Comparative Example 2 |
| Inventive Steel 1 | 60 | 700 | 300 | 40 | 1000 | 76 | 1 | 14 | Comparative Example 3 |
| Inventive Steel 1 | 60 | 900 | 300 | 67 | 1000 | 126 | 1 | 6.8 | Inventive Example 1 |
| Inventive Steel 1 | 60 | 1000 | 300 | 82 | 1000 | 156 | 1 | 4 | Inventive Example 2 |
| Inventive Steel 2 | 70 | 900 | 300 | 67 | 1000 | 126 | 1 | 6.8 | Inventive Example 3 |
| Inventive Steel 2 | 70 | 1000 | 300 | 83 | 1000 | 156 | 1 | 4 | Inventive Example 4 |
| Inventive Steel 2 | 70 | 1100 | 300 | 100 | 1000 | 189 | 1 | 2 | Inventive Example 5 |
| Inventive Steel 2 | 70 | 1200 | 300 | 119 | 1000 | 225 | 0.1 | 0.6 | Inventive Example 6 |
| Inventive Steel 2 | 70 | 1000 | 200 | 83 | 1000 | 156 | 1 | 4 | Inventive Example 7 |
| Inventive Steel 2 | 70 | 1000 | 100 | 83 | 1000 | 156 | 1 | 4 | Inventive Example 8 |

(continued)

| Steels | Reduction Ratio (%) | T* (°C) | $v_r$ (°C /sec) | $V_r^*$ (°C /sec) | $V_c$ (°C /sec) | $v_c^*$ (°C /sec) | $t_m$ (sec) | $t_m^*$ (sec) | Note |
|---|---|---|---|---|---|---|---|---|---|
| Inventive Steel 2 | 70 | 1000 | 300 | 83 | 200 | 156 | 1 | 4 | Inventive Example 9 |
| Inventive Steel 2 | 70 | 1000 | 300 | 83 | 1000 | 156 | 2 | 4 | Inventive Example 10 |
| Inventive Steel 2 | 70 | 1000 | 50 | 83 | 1000 | 156 | 1 | 4 | Comparative Example 4 |
| Inventive Steel 2 | 70 | 700 | 300 | 40 | 1000 | 76 | 1 | 14 | Comparative Example 5 |
| Inventive Steel 2 | 70 | 1000 | 300 | 83 | 1000 | 156 | 5 | 4 | Comparative Example 6 |
| Inventive Steel 2 | 70 | 1000 | 300 | 83 | 1000 | 156 | 20 | 4 | Comparative Example 7 |
| Inventive Steel 2 | 70 | 1000 | 300 | 83 | 80 | 156 | 1 | 4 | Comparative Example 8 |
| Inventive Steel 2 | 70 | 1200 | 300 | 119 | 1000 | 225 | 1 | 0.6 | Comparative Example 9 |
| Inventive Steel 2 | 70 | 1300 | 300 | 140 | 1000 | 264 | 1 | 0.04 | Comparative Example 10 |

$v_r^*$ is a heating rate $((T^*/110)^2)$ calculated by relational expression 2, $v_c^*$ is a cooling rate $((T^*/80)^2)$ calculated by relational expression 3, and $t_m^*$ is a high-temperature retention time $((8-0.006*T^*)^2)$ calculated by relational expression 4.

[Table 3]

| Steels | Microstructure | First hardness (HV) | Second hardness (HV) | relational expression 1 | Packet Size (μm) | Tensile Strength (MPa) | Elongation (%) | Note |
|---|---|---|---|---|---|---|---|---|
| Comparative Steel 1 | F+P | - | - | - | - | 655 | 11.1 | Comparative Example 1 |
| Comparative Steel 1 | F+P | - | - | - | - | 661 | 17.8 | Comparative Example 2 |
| Inventive Steel 1 | F+P | - | - | - | - | 1014 | 11.9 | Comparative Example 3 |
| Inventive Steel 1 | M1+M2 | 454 | 372 | 28.1 | 8.9 | 1347 | 8.2 | Inventive Example 1 |
| Inventive Steel 1 | M1+M2 | 437 | 368 | 25.8 | 12.2 | 1311 | 9.7 | Inventive Example 2 |
| Inventive Steel 2 | M1+M2 | 662 | 513 | 22.5 | 6.8 | 1795 | 7.4 | Inventive Example 3 |
| Inventive Steel 2 | M1+M2 | 650 | 520 | 20 | 8.5 | 1775 | 8.1 | Inventive Example 4 |
| Inventive Steel 2 | M1+M2 | 627 | 510 | 23.7 | 13.7 | 1771 | 7.7 | Inventive Example 5 |
| Inventive Steel 2 | M1+M2 | 619 | 526 | 25.1 | 16.7 | 1702 | 8.1 | Inventive Example 6 |
| Inventive Steel 2 | M1+M2 | 634 | 513 | 19.1 | 11.8 | 1763 | 7.3 | Inventive Example 7 |
| Inventive Steel 2 | M1+M2 | 607 | 549 | 9.6 | 10.7 | 1742 | 7.1 | Inventive Example 8 |
| Inventive Steel 2 | M1+M2 | 614 | 545 | 11.2 | 9.1 | 1711 | 7.2 | Inventive Example 9 |
| Inventive Steel 2 | M1+M2 | 631 | 560 | 11.2 | 9.6 | 1759 | 7.2 | Inventive Example 10 |
| Inventive Steel 2 | M1+M2 | 567 | 540 | 4.7 | 15.5 | 1687 | 6.4 | Comparative Example 4 |

(continued)

| Steels | Micros tructure | First hardness (HV) | Second hardness (HV) | relational expression 1 | Packet Size (μm) | Tensile Strength (MPa) | Elongation (%) | Note |
|---|---|---|---|---|---|---|---|---|
| Inventive Steel 2 | F+P | - | - | - | - | 1387 | 3.2 | Comparative Example 5 |
| Inventive Steel 2 | M1+M2 | 591 | 563 | 4.8 | 19.7 | 1712 | 5.9 | Comparative Example 6 |
| Inventive Steel 2 | M1+M2 | 578 | 553 | 4.3 | 27.7 | 1699 | 2.9 | Comparative Example 7 |
| Inventive Steel 2 | F+P | - | - | - | - | 649 | 20.1 | Comparative Example 8 |
| Inventive Steel 2 | M1+M2 | 570 | 543 | 22.1 | 4.7 | 1689 | 6.7 | Comparative Example 9 |
| Inventive Steel 2 | M1+M2 | 559 | 536 | 28.9 | 4.1 | 1684 | 6.4 | Comparative Example 10 |

Here, F is ferrite, P is pearlite, M1 is martensite having a first hardness, and M2 is martensite having a second hardness

Inventive examples 1 to 10, satisfying a composition and a manufacturing method according to an exemplary embodiment in the present disclosure, include two kinds of martensite, a hardness difference of which is between 5% to 30%, thereby having tensile strength of 1200 MPa or more and elongation of 7% or more.

Meanwhile, comparative examples 1 and 2 include ferrite and pearlite as a microstructure after heat treatment as a carbon content in steel is relatively low, and strength thereof is inferior.

In addition, in comparative example 3, since a heating temperature (T*) is relatively low, ferrite and pearlite are included as a microstructure after heat treatment, and strength thereof is inferior. In comparative example 5, a heating temperature (T*) is relatively low, but a carbon content is relatively high. Thus, strength of steel is in a range controlled according to an exemplary embodiment in the present disclosure. However, a rolling structure by cold rolling is not sufficiently loosened, whereby ductility thereof is inferior.

In addition, in comparative examples 4, 6, 7, 9, and 10, one of $v_r$ and $t_m$ is outside of a range controlled according to an exemplary embodiment in the present disclosure. Thus, an austenite grain is coarsened, and carbon is diffused, whereby a martensite structure in which a difference of hardness is less than 5% is formed. In addition, steel strength is excellent, but ductility thereof is inferior.

In addition, in comparative example 8, $v_c$ is outside of a range controlled according to an exemplary embodiment in the present disclosure. Ferrite and pearlite structures are formed during cooling the steel sheet, and ductility thereof is excellent but strength is inferior.

Meanwhile, FIG. 2 is a view illustrating a microstructure of a steel sheet after heat treatment, observed with an optical microscope, according to inventive example 4 of the present disclosure. FIG. 3 is a view illustrating a microstructure of a steel sheet after heat treatment, observed with an optical microscope, according to comparative example 5. Referring to FIG. 2, in a case of inventive example 4, a size of a martensite packet is finely formed to be 20 μm or less. Thus, a plate inside the packet is also finely formed. Meanwhile, referring to FIG. 3 illustrating comparative example 5, a size of a martensite packet exceeds 20 pm, and thus, martensite is formed to be coarse. In addition, a plate inside the packet is also formed to be coarse.

**Claims**

1. A quenched steel sheet consisting of, by wt%, carbon (C) : 0.05% to 0.25%, silicon (Si) : 0.5% or less with the exception of 0, manganese (Mn): 0.1% to 2.0%, phosphorus (P): 0.05% or less, sulfur (S): 0.03% or less, and the balance of iron (Fe) and other unavoidable impurities,
   wherein the quenched steel sheet includes 90 volume% or more of martensite having a first hardness and martensite having a second hardness as a microstructure of the steel sheet, wherein the first hardness has a greater hardness value than a hardness value of the second hardness, and a ratio of a difference between the first hardness and the second hardness and the first hardness satisfies relational expression 1,

   [Relational Expression 1]

   $5 \le$ (first hardness-second hardness)/(first hardness)*100 $\le 30.$,

   and
   wherein an average packet size of the martensite having the first hardness and the martensite having the second hardness is 20 μm or less.

2. The quenched steel sheet of claim 1, wherein a tensile strength of the steel sheet is 1200 MPa or more, and elongation of the steel sheet is 7% or more.

3. A method for manufacturing a quenched steel sheet comprising:

   cold rolling a steel sheet consisting of, by wt%, carbon (C) : 0.05% to 0.25%, silicon (Si): 0.5% or less with the exception of 0, manganese (Mn) : 0.1% to 2.0%, phosphorus (P) : 0.05% or less, sulfur (S): 0.03% or less, and the balance of iron (Fe) and other unavoidable impurities, and comprising ferrite and pearlite as a microstructure at a reduction ratio of 30% or more;
   heating the cold-rolled steel sheet to a heating temperature (T*) of Ar3°C to Ar3+500°C; and
   cooling the heated steel sheet,
   wherein in the heating of the cold-rolled steel sheet, a heating rate ($v_r$, °C/sec) satisfies relational expression 2, and in the cooling of the heated steel sheet, a cooling rate ($v_c$, °C/sec) satisfies relational expression 3,

[Relational Expression 2]

$$v_r \geq (T^*/110)^2$$

[Relational Expression 3]

$$v_c \geq (T^*/80)^2,$$

and

wherein in the cooling of the heated steel sheet, the high-temperature retention time ($t_m$) satisfies relational expression 4,

[Relational Expression 4]

$$t_m \leq (8-0.006*T^*)^2,$$

and

wherein the microstructure of the heated steel sheet is an austenite single phase structure having an average diameter of 20 $\mu$m or less, and

wherein the martensite with the first hardness transforms during heat treatment from regions which are pearlite and adjacent to the pearlite before the heat treatment, and wherein the martensite with the second hardness transforms during heat treatment from regions which are ferrite and adjacent to the ferrite before the heat treatment.

**Patentansprüche**

1. Vergütetes Stahlblech, bestehend aus (in Gew.-%) Kohlenstoff (C): 0,05 % bis 0,25 %, Silicium (Si): 0,5 % oder weniger, aber nicht 0, Mangan (Mn): 0,1 % bis 2,0 %, Phosphor (P): 0,05 % oder weniger, Schwefel (S): 0,03 % oder weniger,

   wobei der Rest aus Eisen (Fe) und anderen unvermeidbaren Verunreinigungen besteht,

   wobei das vergütete Stahlblech 90 Volumen-% oder mehr Martensit mit einer ersten Härte und Martensit mit einer zweiten Härte als Mikrogefüge des Stahlblechs umfasst, wobei die erste Härte einen größeren Härtewert als die zweite Härte aufweist, und ein Verhältnis einer Differenz zwischen der ersten Härte und der zweiten Härte und der ersten Härte den relationalen Ausdruck 1 erfüllt,

   [Relationaler Ausdruck 1]

   $$5 \leq \text{(erste Härte-zweite Härte)}/\text{(erste Härte)}*100 \leq 30.,$$

   und

   wobei eine durchschnittliche Paketgröße des Martensits mit der ersten Härte und des Martensits mit der zweiten Härte 20 $\mu$m oder weniger beträgt.

2. Vergütetes Stahlblech nach Anspruch 1, wobei eine Zugfestigkeit des Stahlblechs 1200 MPa oder mehr beträgt, und die Elongation des Stahlblechs 7 % oder mehr beträgt.

3. Verfahren zur Herstellung eines vergüteten Stahlblechs, umfassend:

   Kaltwalzen eines Stahlblechs, bestehend aus (in Gew.-%) Kohlenstoff (C): 0,05 % bis 0,25 %, Silicium (Si): 0,5 % oder weniger, aber nicht 0, Mangan (Mn): 0,1 % bis 2,0 %, Phosphor (P): 0,05 % oder weniger, Schwefel (S): 0,03 % oder weniger, wobei der Rest aus Eisen (Fe) und anderen unvermeidbaren Verunreinigungen besteht, und umfassend Ferrit und Perlit als Mikrogefüge bei einem Abbaugrad von 30 % oder mehr;

   Aufheizen des kaltgewalzten Stahlblechs auf eine Temperatur (T*) von Ar3°C bis Ar3+500 °C; und

   Abkühlen des aufgeheizten Stahlblechs,

   wobei beim Aufheizen des kaltgewalzten Stahlblechs eine Aufheizgeschwindigkeit ($v_r$, °C/sec) den relationalen Ausdruck 2 erfüllt, und beim Abkühlen des aufgeheizten Stahlblechs eine Abkühlgeschwindigkeit ($v_c$, °C/sec) den relationalen Ausdruck 3 erfüllt,

$$[\text{Relationaler Ausdruck 2}]$$

$$v_r \geq (T*/110)^2$$

$$[\text{Relationaler Ausdruck 3}]$$

$$v_c \geq (T*/80)^2,$$

und

wobei beim Abkühlen des aufgeheizten Stahlblechs die Hochtemperatur-Verweildauer ($t_m$) den relationalen Ausdruck 4 erfüllt,

$$[\text{Relationaler Ausdruck 4}]$$

$$tm \leq (8-0,006*T*)^2,$$

und
wobei das Mikrogefüge des aufgeheizten Stahlblechs ein einphasiges Austenitgefüge mit einem mittleren Durchmesser von 20 $\mu$m oder weniger ist, und
wobei der Martensit mit der ersten Härte sich während der Wärmebehandlung aus Bereichen umwandelt, die vor der Wärmebehandlung Perlit und dem Perlit benachbart sind, und wobei der Martensit mit der zweiten Härte sich während der Wärmebehandlung aus Bereichen umwandelt, die vor der Wärmebehandlung Ferrit und dem Ferrit benachbart sind.

## Revendications

1. Tôle d'acier trempé constituée, en % en poids, de carbone (C) : 0,05 % à 0,25 %, de silicium (Si) : 0,5 % ou moins, à l'exception de 0, de manganèse (Mn) : 0,1 % à 2,0 %, de phosphore (P) : 0,05 % ou moins, de soufre (S) : 0,03 % ou moins, le reste étant du fer (Fe) et d'autres impuretés inévitables,
laquelle tôle d'acier trempée inclut 90 % en volume ou plus de martensite ayant une première dureté et de martensite ayant une seconde dureté en tant que microstructure de la tôle d'acier, la première dureté ayant une valeur de dureté supérieure à une valeur de dureté de la seconde dureté, et un rapport d'une différence entre la première dureté et la seconde dureté sur la première dureté correspond à l'expression relationnelle 1,

$$[\text{Expression relationnelle 1}]$$

$$5 \leq (\text{première dureté} - \text{seconde dureté})/(\text{première dureté})*100 \leq 30,$$

et
dans laquelle une taille moyenne de paquets de la martensite ayant la première dureté et de la martensite ayant la seconde dureté est de 20 $\mu$m ou moins.

2. Tôle d'acier trempé selon la revendication 1, dans laquelle la résistance à la traction de la tôle d'acier est de 1200 MPa ou plus et l'allongement de la tôle d'acier est de 7 % ou plus.

3. Procédé de fabrication d'une tôle d'acier trempé consistant à :

laminer à froid une tôle d'acier constituée, en % en poids, de carbone (C) : 0,05 % à 0,25 %, de silicium (Si) : 0,5 % ou moins à l'exception de 0, de manganèse (Mn) : 0,1 % à 2,0 %, de phosphore (P) : 0,05 % ou moins, de soufre (S) : 0,03 % ou moins, le reste étant du fer (Fe) et d'autres impuretés inévitables, et comprenant de la ferrite et de la perlite en tant que microstructure à un rapport de réduction de 30 % ou plus ;
chauffer la tôle d'acier laminée à froid à une température de chauffage (T*) de Ar3 °C à Ar3+500 °C ; et

refroidir la tôle d'acier chauffée,

dans lequel, lors du chauffage de la tôle d'acier laminée à froid, une vitesse de chauffage ($v_r$, °C/sec) satisfait l'expression relationnelle 2 et, lors du refroidissement de la tôle d'acier chauffée, une vitesse de refroidissement ($v_c$, °C/sec) satisfait l'expression relationnelle 3,

[Expression relationnelle 2]

$$v_r \geq (T*/110)^2$$

[Expression relationnelle 3]

$$v_c \geq (T*/80)^2$$

et

dans lequel, lors du refroidissement de la tôle d'acier chauffée, le temps de rétention à haute température ($t_m$) satisfait l'expression relationnelle 4,

[Expression relationnelle 4]

$$t_m \leq (8-0,006*T*)^2$$

et

dans lequel la microstructure de la tôle d'acier chauffée est une structure monophasée austénitique ayant un diamètre moyen de 20 $\mu$m ou moins et

dans lequel la martensite ayant la première dureté se transforme pendant le traitement thermique à partir de régions qui sont de la perlite et adjacentes à la perlite avant le traitement thermique, et dans lequel la martensite ayant la seconde dureté se transforme pendant le traitement thermique à partir de régions qui sont de la ferrite et adjacentes à la ferrite avant le traitement thermique.

【Figure 1】

【Figure 2】

【Figure 3】

**EP 3 088 545 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 0782785
- KR 0270396
- KR 1054773
- EP 2581465 A1
- WO 2013105631 A1